# FASCICULE DE BREVET EUROPEEN

(11) **EP 0 778 426 B1**
(45) Date de publication et mention de la délivrance du brevet: **28.02.2001**
(21) Numéro de dépôt: 96119466.9
(22) Date de dépôt: 04.12.1996
(51) Int. Cl.: F16D 25/08, F16D 25/12, F15B 7/08, B60T 11/16

(54) **Dispositif de commande hydraulique d'un embrayage de véhicule automobile comportant au moins un cylindre muni d'un piston métallique**
Hydraulische Kraftfahrzeug-Kupplungsbetätigungseinrichtung eingliedernd einen Zylinder mit einem metallischen Kolben
Motor vehicle hydraulic clutch actuation device having a cylinder with a metal piston

(30) Priorité: 05.12.1995 FR 9514369
(43) Date de publication de la demande: 11.06.1997
(73) Titulaire: VALEO, 75017 Paris (FR)
(72) Inventeur: Rey, Frédéric, 95210 Saint Gratien (FR)
(74) Mandataire: Gamonal, Didier

(56) Documents cités:
- EP-A- 0 345 451
- DE-A- 3 111 411
- DE-A- 4 322 969
- FR-A- 2 370 187
- FR-A- 2 539 195
- US-A- 5 291 974

## Description

L'invention concerne un dispositif de commande hydraulique d'un embrayage de véhicule automobile du type comportant au moins un cylindre émetteur, ou récepteur, muni d'un piston métallique.

L'invention concerne plus particulièrement un dispositif de commande hydraulique d'un embrayage de véhicule automobile, du type comportant au moins un cylindre de commande, du type dans lequel le cylindre comporte un corps de cylindre sensiblement tubulaire dans lequel coulisse axialement un piston qui délimite, par une face transversale avant, une chambre hydraulique cylindrique et qui coopère, par une face arrière, avec une tige de piston, du type dans lequel un orifice de raccordement d'une canalisation débouche dans la chambre hydraulique, et du type dans lequel le corps de cylindre est réalisé en matière plastique.

Il est connu de l'état de la technique de réaliser un tel cylindre entièrement en matière plastique, aussi bien pour le corps de cylindre que pour le piston.

De plus, selon l'art antérieur, l'étanchéité entre le piston et le corps de cylindre, afin de délimiter la chambre hydraulique, est généralement réalisée en agençant un joint élastomère annulaire sur le piston, le joint étant destiné à coopérer avec une surface cylindrique du corps de cylindre, généralement la surface cylindrique qui délimite la chambre hydraulique dans le corps de cylindre.

Cette solution impose donc de devoir assurer une étanchéité dynamique entre deux surfaces en matière plastique, ce qui est particulièrement délicat.

En effet, du fait du coefficient de frottement élevé du joint sur la surface plastique, le joint, généralement du type joint à lèvre, tend à être affecté d'un phénomène de broutement lorsqu'il se déplace le long de la surface.

Or, ce mouvement saccadé provoque des décollements intempestifs de la lèvre par rapport à la surface cylindrique, ce qui rompt l'étanchéité recherchée.

De plus, afin de réaliser une bonne étanchéité, il est nécessaire que la surface sur laquelle frotte le joint ait des caractéristiques dimensionnelles et de rugosité particulièrement bien définies, ce qui est relativement difficile à obtenir sur des surfaces cylindriques internes concaves, telles qu'on les connaît de l'état de la technique.

Il a été proposé, dans la demande de brevet européen EP-A-0 345 451, un cylindre du type précédent dans lequel le joint d'étanchéité annulaire est porté par le corps de cylindre et est destiné à coopérer avec une surface cylindrique externe du piston qui est réalisé en matière plastique.

Toutefois, le dispositif proposé dans ce document laisse entier le problème du broutement qui risque d'apparaître du fait de la coopération d'un joint en matière élastomère avec une surface en matière plastique.

Ce problème est résolu selon l'invention par la partie caractérisante de la revendication 1.

Selon d'autres caractéristiques de l'invention :
- le corps de cylindre est réalisé en au moins deux parties qui comprennent un corps principal en forme de tube étagé et un tube arrière de guidage, la chambre hydraulique est formée dans une partie avant du corps principal, et le tube arrière de guidage est reçu coaxialement dans une partie arrière de plus grand diamètre interne du corps principal, axialement en arrière du joint d'étanchéité, de sorte que le piston est au moins en partie guidé dans le tube arrière ;
- le joint d'étanchéité est agencé dans le corps principal du corps de cylindre ;
- le joint d'étanchéité est porté par l'extrémité axiale avant du tube arrière de guidage ;
- la surface externe du tube arrière de guidage et/ou la surface interne en vis-à-vis de la partie arrière du corps principal sont munies de gorges annulaires formant des chicanes d'étanchéité ;
- le corps de cylindre porte un deuxième joint d'étanchéité qui est décalé axialement du premier joint et qui coopère avec la paroi latérale du piston ;
- le second joint d'étanchéité est reçu dans un logement formé dans l'extrémité axiale avant du tube arrière et une rondelle est agencée dans le corps principal, en butée contre l'extrémité axiale avant du tube arrière pour former une surface d'appui axiale arrière pour le premier joint ;
- les deux joints sont portés par l'extrémité axiale avant du tube arrière de guidage ;
- la surface cylindrique interne de l'extrémité axiale avant du tube arrière est étagée de manière à former deux logements décalés axialement pour recevoir les deux joints d'étanchéité, le logement arrière est de diamètre inférieur au logement avant de manière à délimiter un épaulement radial, une rondelle est en butée contre l'épaulement de manière à former une surface d'appui arrière pour le joint qui est reçu dans le logement avant, et en ce que le logement avant débouche dans l'extrémité axiale avant du tube ;
- l'un au moins des joints d'étanchéité est une coupelle à lèvre à frottement radial ;
- l'un au moins des joints d'étanchéité est un joint composite ;
- le diamètre interne du tube arrière de guidage est égal à celui de la chambre hydraulique et la partie arrière du corps principal du corps de cylindre, dans laquelle est reçu le tube de guidage, est d'un diamètre supérieur à celui de la chambre hydraulique ;
- le piston comporte une portion tubulaire qui s'étend axialement au-delà de la face transversale avant du piston de manière à guider un ressort de compression qui est agencé dans la chambre hydraulique entre la face transversale avant du piston et une paroi transversale avant de la chambre ;
- le piston comporte une portion tubulaire qui s'étend axialement au-delà de la face arrière du piston et dans laquelle est reçue une extrémité avant de la tige de piston ;
- au moins l'une des extrémités axiales du piston coopère avec une surface cylindrique interne du corps de cylindre qui est munie de rainures longitudinales ; - les rainures axiales sont réalisées venues de matière avec le corps de cylindre ;
- les rainures axiales sont agencées dans la chambre hydraulique ;
- les rainures axiales sont agencées angulairement en correspondance avec des nervures de rigidification formées à l'extérieur du corps de cylindre ;
- le piston est réalisé en alliage d'aluminium ;
- le piston est réalisé en acier ;
- le piston est réalisé par forgeage ;
- le piston est réalisé par emboutissage ;
- le piston est guidé dans le corps de cylindre par au moins deux patins annulaires, avant et arrière, qui sont réalisés sous la forme de bagues en matériau à faible coefficient de frottement, et qui sont reçus chacun dans une gorge annulaire agencée à chacune des extrémités axiales de la paroi latérale du piston ; et
- le joint d'étanchéité coopère avec un tronçon de la paroi latérale du piston qui est compris entre les deux patins de guidage.

D'autres caractéristiques et avantages de l'invention apparaîtront à la lecture de la description détaillée qui suit pour la compréhension de laquelle on se reportera aux dessins annexés dans lesquels :
- les figures 1 et 2 représentent un premier mode de réalisation d'un cylindre récepteur réalisé conformément aux enseignements de l'invention et dans lequel le piston est représenté respectivement dans une première position avancée et dans une seconde position reculée ;
- les figures 3 et 4, et 6 et 7 sont des vues similaires à celles des figures 1 et 2 dans lesquelles on a représenté un deuxième et un troisième modes de réalisation d'un cylindre récepteur selon l'invention.
- la figure 5 représente une variante du second mode de réalisation ;
- la figure 8 est une vue agrandie d'un détail de la figure 6 ; et
- la figure 9 représente une variante de réalisation dans laquelle la chambre hydraulique est munie de rainures axiales.

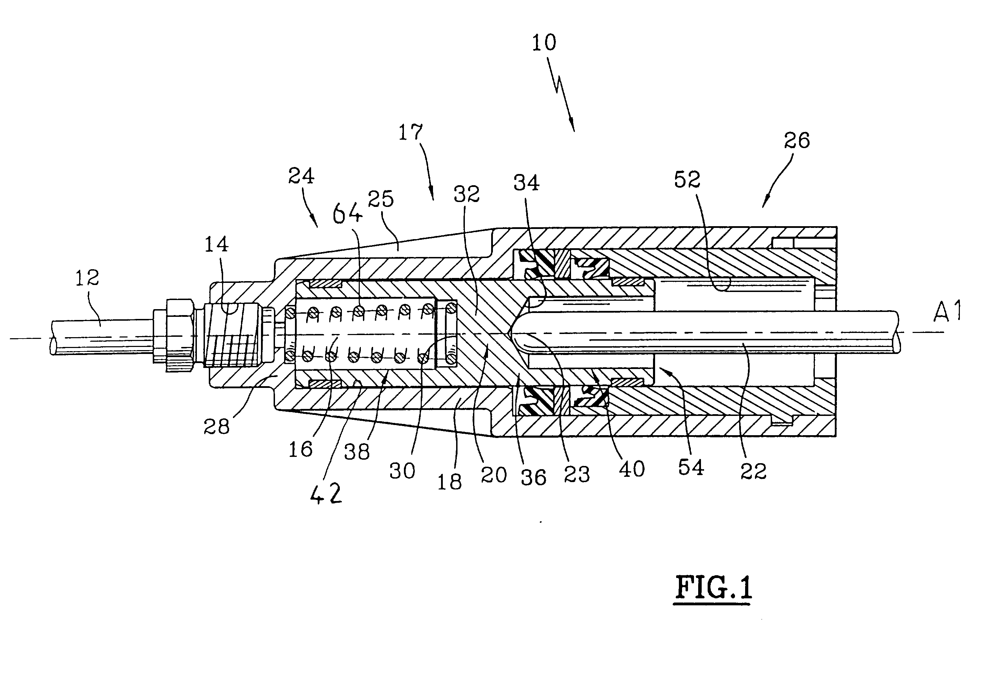

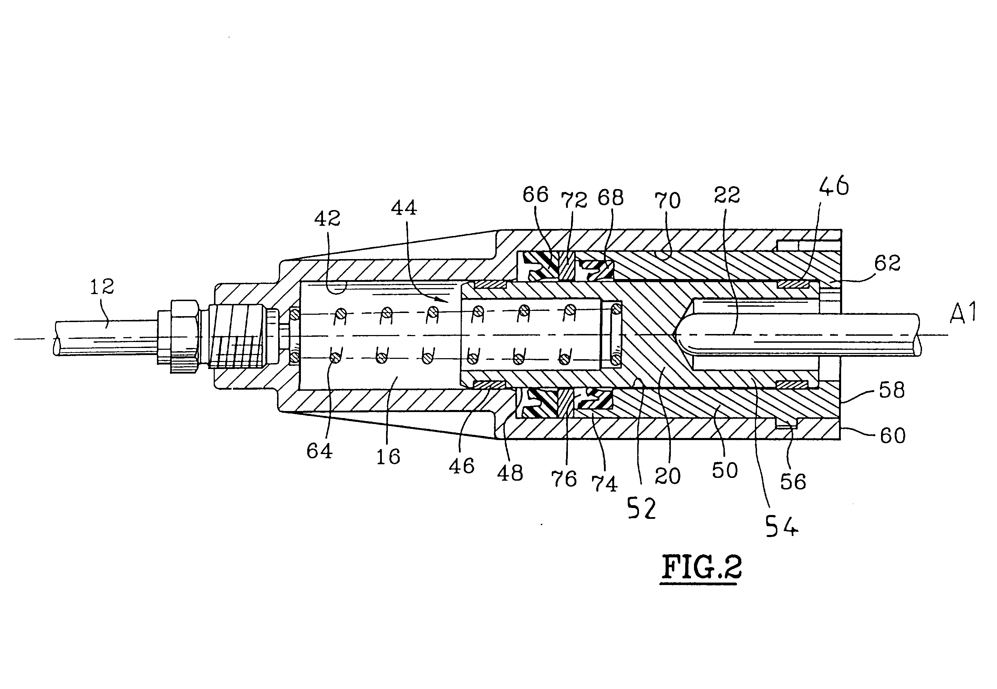

On a représenté sur les figures 1 et 2 un premier mode de réalisation d'un cylindre récepteur 10 d'un dispositif de commande hydraulique d'un embrayage de véhicule automobile.

Un tel dispositif (non représenté) comporte essentiellement un cylindre émetteur, de structure similaire au cylindre récepteur ici représenté, et dont un piston se déplace sous l'action d'une tige de commande reliée par exemple à une pédale d'embrayage sur laquelle agit le conducteur. Le piston du cylindre émetteur est destiné à expulser un fluide, tel que de l'huile, contenu dans une chambre hydraulique en direction d'une canalisation 12 qui relie le cylindre émetteur au cylindre récepteur 10.

La canalisation 12 débouche par un orifice d'entrée 14 à l'intérieur d'une chambre hydraulique 16 à volume variable délimitée dans un corps de cylindre 17 du cylindre récepteur 10 pour provoquer le déplacement d'un piston 20 qui, par l'intermédiaire d'une tige de commande 22, agit par exemple sur une fourchette de commande d'un embrayage (non représentée) pour provoquer le débrayage. Le corps de cylindre 17 est réalisé en matière plastique.

Dans l'exemple de réalisation qui est représenté sur les figures, le corps de cylindre 17 comporte un corps principal 18 en matière plastique qui présente une forme de tube étagé d'axe A1 et qui comporte une partie avant 24 de diamètre réduit par rapport à une partie arrière 26.

On notera qu'il en est de même dans tous les autres modes de réalisation.

L'alésage interne du corps principal 18 présente donc un changement de diamètre, sa partie avant 24 étant de diamètre interne réduit par rapport à celui de sa partie arrière 26.

Afin de rigidifier le corps de cylindre 17, il est prévu, tout autour de la partie avant 24 du corps principal 18, des nervures de rigidification 25.

La chambre hydraulique 16 est délimitée dans la partie avant 24 du corps de cylindre 17 et elle est délimitée axialement, à l'avant, par une paroi transversale avant 28 dans laquelle est formé l'orifice d'entrée 14, et, à l'arrière, par une face transversale avant 30 du piston 20.

Dans ce premier mode de réalisation, l'orifice d'entrée 14 débouche axialement dans la chambre hydraulique 16 et est du type raccord à vis.

Le volume de la chambre hydraulique 16 est susceptible de varier en fonction de la position du piston 20 dans le corps de cylindre 17, le piston 20 étant susceptible de coulisser axialement entre une première position avancée représentée sur la figure 1 et une deuxième position reculée représentée sur la figure 2.

Le piston 20 est essentiellement formé d'une paroi transversale 32, dont la face avant 30 délimite la chambre hydraulique 16 et dont une face arrière 34 coopère avec la tige de commande 22, et d'une jupe latérale cylindrique 36 qui assure le guidage du piston 20 dans le corps de cylindre 17.

Dans un dispositif de commande hydraulique d'un embrayage, la pression du fluide est susceptible d'atteindre des valeurs de l'ordre de 30 à 40 bars et il est donc nécessaire d'assurer, d'une part, un excellent guidage du piston 20 dans le corps de cylindre 17, pour éviter tout risque d'arc-boutement et de coincement et, d'autre part, d'assurer une étanchéité de très bonne qualité susceptible de résister à de telles pressions. Dans le but d'améliorer le guidage du piston 20, la jupe annulaire 36 s'étend axialement sur une longueur dont la valeur est comprise entre trois et quatre fois la valeur de son diamètre et comporte ainsi, de part et d'autre de la paroi transversale 32 du piston 20, un tronçon tubulaire avant 38 et un tronçon tubulaire arrière 40.

Le tronçon tubulaire avant 38 de la jupe 36 est destiné à coopérer plus particulièrement avec une surface cylindrique interne 42 de la partie avant 24 du corps de cylindre 17 qui délimite la chambre hydraulique 16.

Afin de limiter la surface de frottement du piston 20 dans le corps de cylindre 17, l'extrémité axiale avant 44 de la jupe 36 du piston 20 porte un patin annulaire 46 de guidage, ici en forme de bague, qui est reçu dans une gorge correspondante formée dans la surface cylindrique externe 48 du tronçon tubulaire avant 38 de la jupe 36.

Le patin annulaire 46 coopère avec la surface cylindrique interne 42 du corps de cylindre 17 pour le guidage du piston 20 et il est ainsi possible de prévoir un léger jeu radial entre le piston 20 et le corps de cylindre 17, ce qui permet de diminuer de manière importante la surface de contact de ces deux éléments.

Le tronçon arrière 40 de la jupe 36 du piston 20 coulisse axialement dans la partie arrière 26 du corps de cylindre 17.

Plus précisément, le tronçon arrière 40 coopère avec un tube arrière de guidage 50 qui est rapporté axialement dans la partie arrière 26 du corps principal 18 et dont une surface cylindrique interne 52 est de diamètre sensiblement égal au diamètre de la surface cylindrique interne 42 de la partie avant 24 du corps principal 18. Le tube arrière 50 est en matière plastique comme le corps principal 18. Il en est avantageusement de même dans les autres exemples de réalisation. Le tube arrière 50 est logé dans le corps principal 18 (dans la partie arrière 26 de celui-ci) à la faveur du changement interne de diamètre.

De même que l'extrémité axiale avant 44, l'extrémité axiale arrière 54 de la jupe 36 porte également un autre patin annulaire 46 de guidage destiné à limiter les frottements entre le piston 20 et le corps de cylindre 17.

Dans ce premier exemple de réalisation, le tube arrière 50 est fixé dans le corps principal 18 par un dispositif à montage baïonnette 56 et son extrémité axiale arrière 58 affleure à l'extrémité axiale arrière 60 du corps principal 18 et comporte un collet radial interne 62 qui permet de limiter vers l'arrière la course axiale du piston 20 dans le corps de cylindre 17.

Grâce au montage baïonnette on introduit axialement le tube arrière dans le corps principal puis, le tube 50 présentant des saillies en forme de rampe et le corps 18 des évidements complémentaires en forme de rampe, on effectue une rotation permettant de compenser les tolérances de fabrication et les différents jeux avec obtention d'un serrage.

Le tronçon avant 38 de la jupe annulaire 36 du piston 20 délimite un logement cylindrique qui permet le guidage d'un ressort de compression 64 qui est interposé, dans la chambre hydraulique 16, entre la paroi transversale avant 28 du corps principal 18 et la face avant transversale 30 du piston 20, dans le but de forcer le piston 20 au contact de la tige de commande 22.

De manière similaire, le tronçon arrière tubulaire 40 de la jupe annulaire 36 délimite un logement cylindrique dans lequel est reçue l'extrémité axiale avant de la tige de commande 22.

Comme on peut le voir, sur ce premier mode de réalisation, la face arrière 34 de la paroi transversale 32 du piston 20 est conique et coopère avec l'extrémité axiale avant 23 de la tige 22 qui est sphérique de manière que les efforts transmis à la tige 22 par le piston 20 soient dirigés selon l'axe A1 du corps de cylindre 17.

L'étanchéité de la chambre hydraulique 16 par rapport à l'extérieur est assurée par deux joints d'étanchéité, primaire 66 et secondaire 68, décalés axialement l'un par rapport à l'autre, qui, conformément aux enseignements de l'invention, sont portés par le corps de cylindre 17 et coopèrent avec la surface cylindrique externe 48 de la jupe annulaire 36 du piston 20 qui, selon l'invention, est réalisée en matériau métallique.

Le piston 20 pourra par exemple être réalisé en acier, par forgeage, en alliage d'aluminium, mais d'autres modes d'obtention et d'autres matériaux pourront être utilisés.

Dans le premier exemple de réalisation qui est représenté sur les figures 1 et 2, le joint primaire 66 est une coupelle d'étanchéité à lèvres et elle est portée par la surface cylindrique interne 70 de la partie arrière 26 du corps principal 18 dont on peut voir sur les figures qu'elle est lisse, à l'exception des rainures nécessaires au dispositif de fixation à baïonnette 56. Les joints 66,68 sont en matériau élastomère.

La coupelle primaire 66 comporte une lèvre à frottement radial qui porte sur un tronçon central de la jupe 36 qui est compris entre les deux patins 46 de guidage du piston 20.

La coupelle 66 est donc agencée à l'extrémité avant de la partie arrière 26 du corps principal 18 et sa position axiale lui est par ailleurs imposée, vers l'arrière, par une rondelle d'appui annulaire 72 qui est elle-même en butée contre l'extrémité axiale avant 74 du tube arrière de guidage 50.

Dans le premier exemple de réalisation, le joint secondaire 68 est agencé dans un logement cylindrique 76 qui est formé dans la surface cylindrique interne 52 du tube arrière 50 et qui débouche dans l'extrémité avant 74 de ce tube 50, et le joint secondaire 68 est réalisé sous la forme d'une coupelle à lèvres. Le joint secondaire 68 a donc un diamètre externe inférieur à celui du joint primaire 66. Ce joint 68 forme un élément de sécurité en cas de fuite au niveau du premier joint 66.

Une telle conception d'un cylindre récepteur 10 permet donc de réaliser une étanchéité particulièrement fiable et performante du fait que les coupelles 66, 68 frottent une surface externe métallique qui sera aisément réalisable avec un très bon état de surface.

Par ailleurs, la très grande longueur de guidage du piston 20 garantit un coulissement aisé de celui-ci dans le corps de cylindre 17 et favorisé par les patins de guidage 46 avant et arrière à faible coefficient de frottement, tel que du «Téflon».

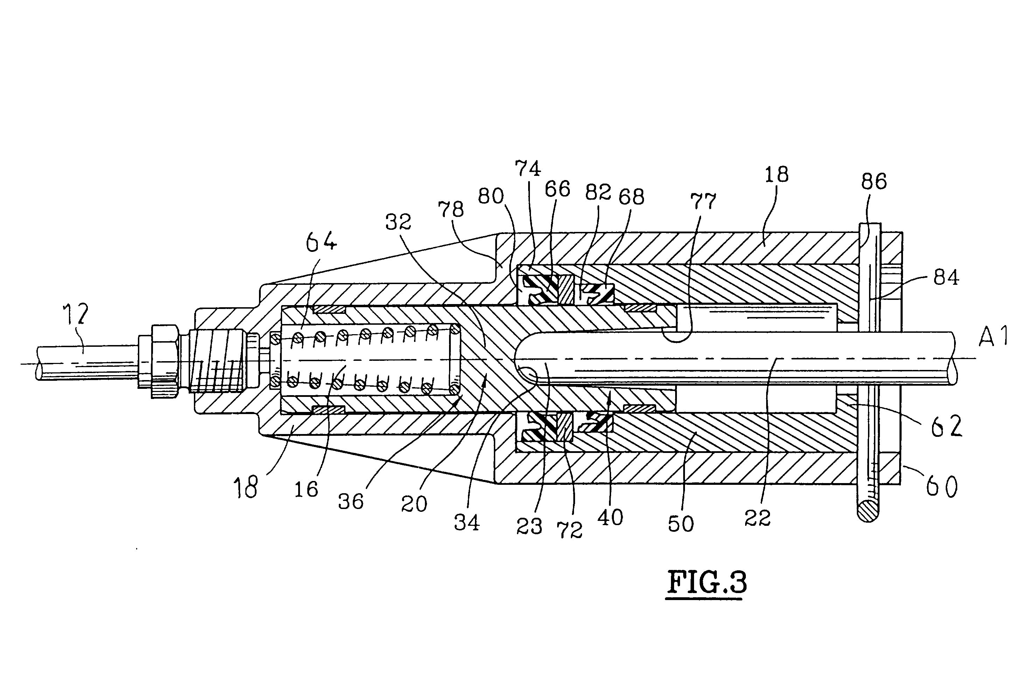

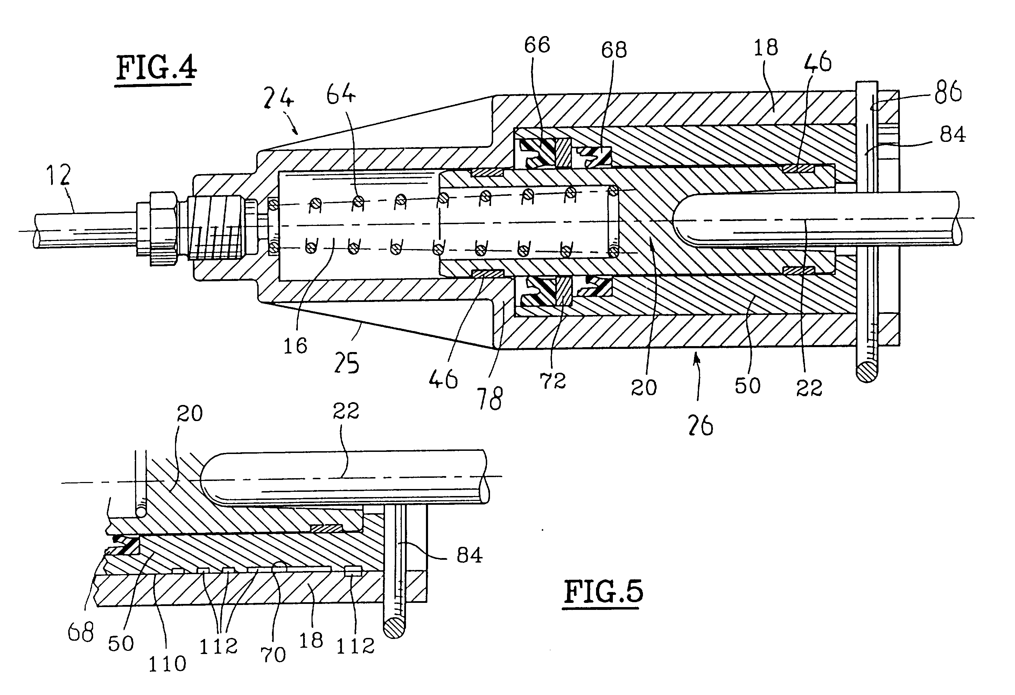

On a représenté sur les figures 3 et 4 une variante de réalisation de l'invention dans laquelle le piston 20 est également réalisé par forgeage en étant métallique.

Une première différence entre ces deux premiers modes de réalisation est visible dans la forme de la face arrière 34 de la paroi transversale 32 du piston 20 qui comporte une portion centrale sphérique assurant un guidage plus précis de l'extrémité avant 23 de la tige 22.

Comme on peut le voir sur les figures, la portion centrale sphérique est de même rayon de courbure que l'extrémité 23 de la tige 22 mais la surface interne 77 du tronçon arrière 40 de la jupe 36 présente une conicité apte à autoriser un léger débattement angulaire de la tige de commande 22 autour de son extrémité avant 23.

Selon une deuxième différence entre les deux premiers modes de réalisation de l'invention, les coupelles primaire 66 et secondaire 68 sont toutes deux portées par le tube arrière de guidage 50 dont l'extrémité axiale avant 74 est en butée contre une paroi transversale avant 78 délimitant, à l'avant, la partie arrière 26 du corps principal 18.

La coupelle primaire 66 est reçue dans un premier logement cylindrique avant 80 qui débouche dans l'extrémité axiale avant 74 du tube 50 tandis que la coupelle secondaire 68 est reçue dans un second logement cylindrique 82 agencé axialement en arrière du premier logement 80 et de diamètre externe inférieur à celui-ci. Le joint secondaire 68 est donc de diamètre externe inférieur à celui du joint primaire 66.

Une face axiale d'épaulement délimite les deux logements 80, 82 et forme une butée pour la rondelle d'appui 72 de la coupelle primaire 66. Comme dans le mode de réalisation des figures 1 et 2 il est prévu des patins avant et arrière de guidage 46.

Enfin, dans ce deuxième mode de réalisation, le tube arrière 50 est fixé axialement dans la partie arrière 26 du corps principal 18 par une broche transversale 84 qui est reçue dans des orifices transversaux 86 agencés à l'extrémité axiale arrière 60 du corps principal 18 et qui coopère avec l'extrémité axiale arrière 58 du tube arrière de guidage 50 doté également d'un collet radial interne de limitation de la course axiale du piston 20.

On a représenté sur la figure 5 une variante de réalisation du deuxième mode de réalisation de l'invention dans laquelle la surface cylindrique externe 110 du tube arrière 50 et/ou la surface cylindrique interne 70 de la partie arrière 26 du corps principal 18 comporte une série de gorges annulaires 112 qui forment des chicanes d'étanchéité.

Ainsi on évite les fuites entre le tube arrière 50 et le corps principal 18.

Toutefois, il est également possible de renforcer l'étanchéité entre le corps principal 18 et le tube arrière 50 en disposant un joint complémentaire (non représenté), de type joint élastomère torique, dans une gorge annulaire formée sur la surface cylindrique externe 110 du tube arrière, le joint portant alors sur la surface cylindrique interne 70 du corps principal 18.

Toute fuite entre le tube 50 et le corps 18 est ainsi évitée. Ceci est valable quel que soit le mode de réalisation.

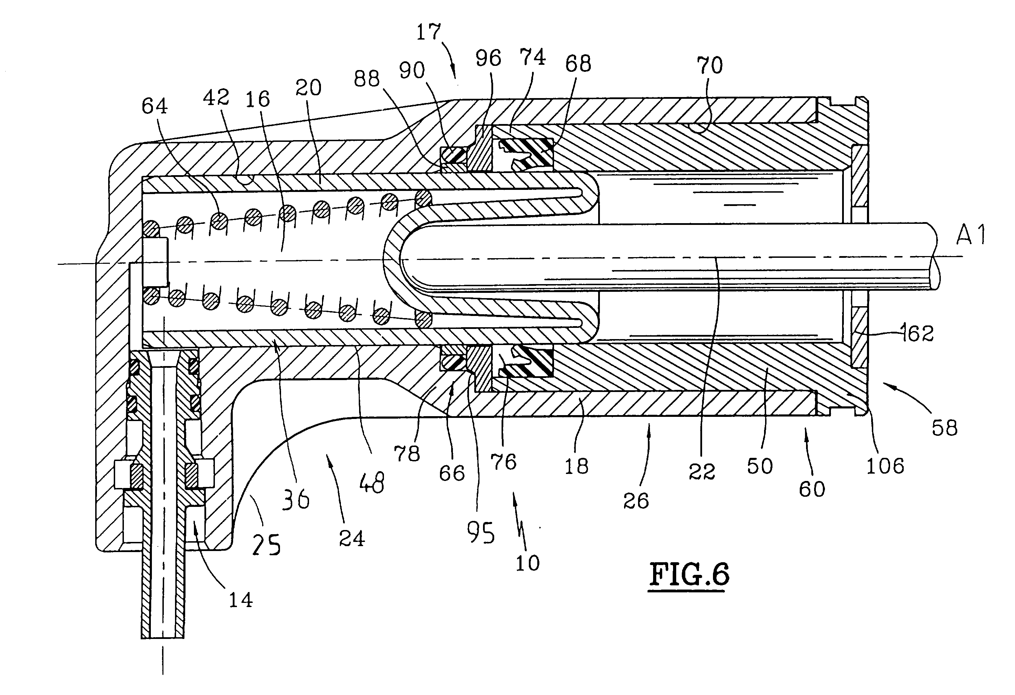

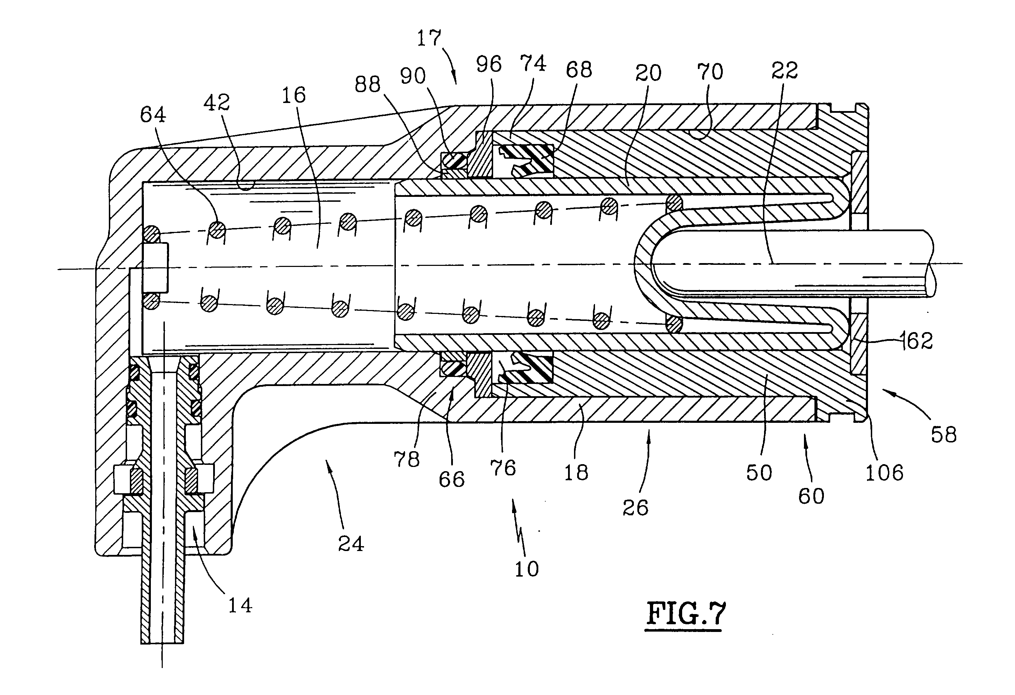

On a représenté aux figures 6,7 et 8 un troisième mode de réalisation de l'invention comportant un piston 20 métallique et des joints d'étanchéité 66, 68 portés par le corps de cylindre 17.

Le piston 20 qui est représenté dans ces figures est réalisé par emboutissage d'une tôle métallique et ne comporte pas de patins de guidage, mais un piston du type précédent pourrait également être utilisé.

Dans ce mode de réalisation de l'invention, l'orifice d'entrée 14 débouche radialement, et non plus axialement, dans la chambre hydraulique 16, ce qui permet de diminuer l'encombrement axial du cylindre récepteur 10.

Enfin, contrairement aux modes de réalisation vus précédemment, le joint d'étanchéité primaire 66 est réalisé sous la forme d'un joint composite et a un diamètre externe inférieur à celui du joint secondaire 68 à lèvres.

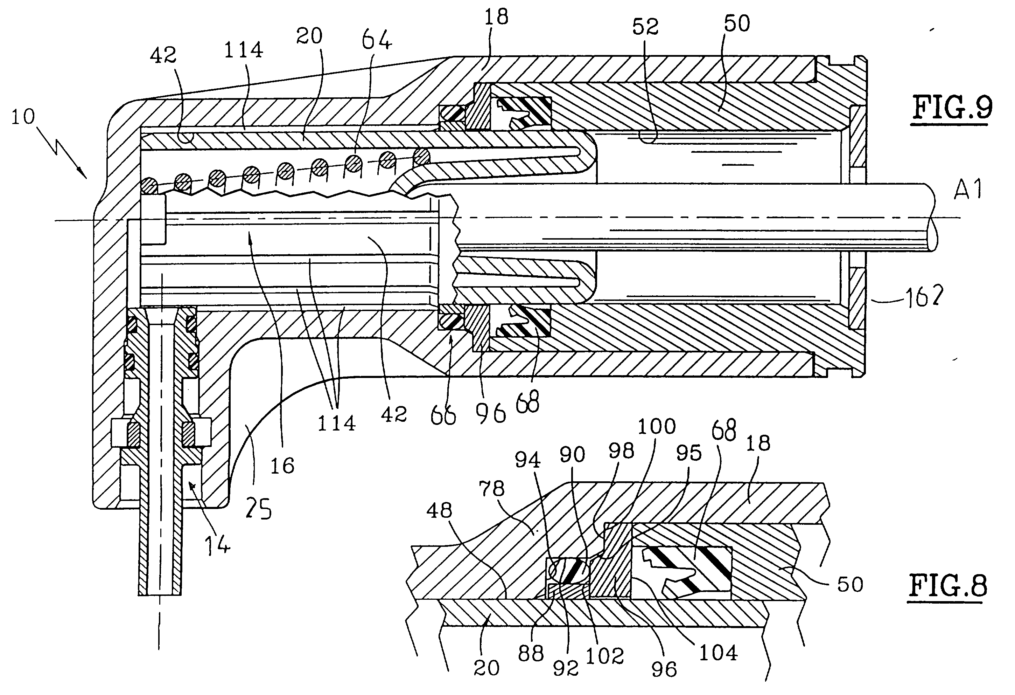

Comme on peut le voir plus particulièrement sur la figure 8, le joint composite 66 comporte essentiellement une bague interne 88 annulaire en matériau à faible coefficient de frottement tel que du «Teflon», et un anneau externe 90 en matière élastomère et il est destiné à être monté serré dans un logement cylindrique 92 formé dans la paroi transversale 78 qui délimite les parties avant 24 et arrière 26 du corps principal 18.

Le logement cylindrique 92 est d'un diamètre compris entre celui des surfaces cylindriques internes 70, 42 respectivement des parties arrière 26 et avant 24 du corps principal 18, et il débouche dans la partie arrière 26 par un chanfrein 95.

Lorsqu'il est en position montée, le joint composite est en butée axialement vers l'avant contre une face axiale avant 94 du logement 92 et il est serré radialement entre la surface cylindrique latérale du logement 92 et la surface cylindrique externe 48 du piston 20.

L'anneau externe 90 en matière élastomère permet, en se déformant, de bien maîtriser la force de serrage appliquée sur la bague interne 88 tout en rattrapant un éventuel défaut de coaxialité entre le piston 48 et le corps de cylindre 17.

On obtient de la sorte une pression de contact entre la bague interne 88 et le piston 48 qui est homogène sur toute la circonférence du piston 48 et on obtient une excellente étanchéité sans pour autant introduire des forces de frottement importantes entre le piston 20 et le corps de cylindre 17.

Il est nécessaire, pour le bon fonctionnement du joint composite 66, que la bague interne 88 et l'anneau externe 90 soient agencés axialement dans le même plan et il est prévu à cet effet une rondelle annulaire d'appui 96 particulière.

La rondelle annulaire d'appui 96 est en appui par la périphérie externe 98 de sa face avant contre la face arrière 100 de la paroi transversale 78 et la périphérie interne 102 de sa face avant possède un bossage qui permet de serrer le joint composite 66 contre la face axiale avant 94 du logement cylindrique 92.

La rondelle d'appui 96 est elle-même maintenue axialement contre la paroi transversale 78 par l'extrémité axiale avant 74 du tube arrière de guidage 50 qui est en appui contre sa face arrière 104. Les périphéries interne 98 et externe 102 de la face avant de la rondelle d'appui 96 sont reliées par un profil correspondant au chanfrein 95, ce qui permet d'obtenir, par leur coopération, un très bon centrage de la rondelle d'appui 96 dans le corps principal 18.

Comme dans le premier mode de réalisation de l'invention, le joint d'étanchéité secondaire 68 est réalisé sous la forme d'une coupelle à lèvres reçue dans un logement cylindrique 76 aménagé dans l'extrémité axiale avant 74 du tube arrière de guidage 50.

Selon un autre aspect de l'invention, le tube arrière de guidage 50 est fixé dans la partie arrière 26 du corps principal 18 par soudage ou par collage. On évite ainsi toute fuite entre le corps principal 18 et le tube arrière 50. Il n'y a donc pas à prévoir de chicane.

Par ailleurs, contrairement aux deux modes de réalisation précédemment décrits, l'extrémité axiale arrière 58 du tube 50 dépasse axialement vers l'arrière au-delà de l'extrémité arrière 60 du corps principal 18 et comporte un collet radial externe 106 qui est agencé en regard de l'extrémité arrière 60 du corps principal 18.

De plus, le collet radial interne 162 de l'extrémité arrière 58 du tube 50 est ici réalisé sous la forme d'une pièce indépendante rapportée.

Le deuxième mode de réalisation d'un cylindre selon l'invention permet un montage simple de l'ensemble des composants.

En effet, il est tout d'abord possible d'agencer successivement dans le tube arrière 50 la coupelle secondaire 68, la rondelle d'appui 72, la coupelle primaire 66 puis le piston 20.

Ensuite, le ressort 64 est disposé dans le logement cylindrique déterminé par la portion tubulaire avant de la jupe 36 du piston 20 et le corps principal 18 peut être amené axialement autour de cet ensemble.

Selon un aspect particulièrement remarquable de l'invention, l'ensemble de ces opérations peuvent être effectuées successivement dans la même direction, ce qui est particulièrement intéressant en vue de l'automatisation du montage.

Le troisième mode de réalisation permet également un tel montage selon une direction unique.

Dans ce cas, le joint secondaire 68 et le piston 20 sont agencés successivement dans le tube 50 puis la rondelle d'appui particulière 96 et le joint composite sont introduits autour du piston 20 en appui contre l'extrémité axiale avant 74 du tube arrière 50.

Le corps principal 18 est alors emboîté axialement autour de ces éléments prémontés.

Lorsque le joint composite 66 arrive au contact du chanfrein 95 de son logement cylindrique 92, il est forcé à l'intérieur du logement 92 par le bossage périphérique interne 102 de la rondelle d'appui 96 jusqu'au fond du logement 92.

Le chanfrein 95 permet notamment de faciliter l'introduction du joint 66 dans le logement 92.

On a représenté sur la figure 9 une variante de réalisation d'un cylindre 10 selon l'invention dans laquelle la surface cylindrique 42 de la chambre hydraulique 16 comporte une série de rainures axiales 114 qui sont réparties régulièrement sur toute la circonférence de la chambre 16, et qui permettent d'obtenir une meilleure répartition des pressions de contact entre le piston 20 et la surface cylindrique 42 de la chambre 16, ainsi qu'un bon guidage du piston 20 malgré les phénomènes de retrait de la matière se produisant au niveau des nervures 25 (aucune surépaisseur ne se forme).

De préférence, ces rainures 114 sont de section semi-circulaire ou au moins arrondie, et non pas à angles vifs, afin de limiter les risques d'apparition d'amorces de rupture.

Ces rainures 114 sont avantageusement réalisées venues de matière avec le corps principal 18 lorsque celui-ci est réalisé par moulage en matière plastique.

On peut alors prévoir que les rainures 114 soient agencées angulairement en correspondance avec les nervures de rigidification 25 externes du corps principal 18. De la sorte, on s'affranchit des éventuels problèmes de surépaisseur de matière dus aux nervures 25, ce qui permet d'améliorer les qualités géométriques des pièces obtenues par moulage.

De la même manière, on peut envisager de munir de rainures axiales la surface cylindrique interne 52 du tube arrière 50.

L'invention a été décrite dans le cadre d'un cylindre récepteur mais il va de soi que des enseignements de l'invention sont transposables sans difficulté à un cylindre émetteur de commande du dispositif d'embrayage.

Ainsi qu'on l'aura compris, s'agissant d'une application à un embrayage de véhicule automobile, lorsque le piston 20 est en position avancée l'embrayage est engagé, le diaphragme, que comporte usuellement l'embrayage, repousse via la fourchette de débrayage la tige 22, le ressort 64 étant alors comprimé. La chambre hydraulique 16 est alors dépressurisée. Le ressort 64 exerce alors une précharge permettant d'appliquer constamment la butée de débrayage, au contact du diaphragme.

En pressurisant la chambre 16 on déplace le piston et donc la tige 22, la fourchette de débrayage et la butée de débrayage. Lorsque le piston 20 occupe la position reculée l'embrayage est alors désengagé.

Bien entendu le tube arrière peut être métallique.

Néanmoins il est avantageux qu'il soit en matière plastique de manière qu'il se dilate de la même manière que le corps principal 18. En outre dans les figures 6 à 9 le tube arrière 50 ainsi que le corps principal servent au guidage du piston.

Dans ce cas le corps principal et le tube arrière sont avantageusement en matière plastique à faible coefficient de frottement. On appréciera, lorsque le piston est embouti (figures 6 à 9) que l'on réduit l'encombrement axial puisque la tige de commande pénètre à l'intérieur au moins de la spire d'extrémité du ressort 64.

Dans tous les cas le tube arrière 50 s'engage à la manière d'un bouchon dans le corps principal 18 et permet de limiter directement (par son collet 62) ou indirectement (grâce à la pièce 162 qu'il porte à solidarisation) le mouvement axial du piston.

## Revendications

1. Dispositif de commande hydraulique d'un embrayage de véhicule automobile, du type comportant au moins un cylindre de commande (10), du type dans lequel le cylindre (10) comporte un corps de cylindre (17) de forme générale tubulaire dans lequel coulisse axialement un piston (20) qui délimite, par une face transversale avant (30), une chambre hydraulique (16) cylindrique et qui coopère, par une face arrière (34), avec une tige de piston (22), du type dans lequel un orifice de raccordement (14) d'une canalisation (12) débouche dans la chambre hydraulique (16), et du type dans lequel le corps de cylindre (17) est réalisé en matière plastique et porte au moins un joint d'étanchéité (66) qui coopère avec la paroi latérale cylindrique (36) du piston (20) pour assurer l'étanchéité de la chambre hydraulique (16), caractérisé en ce que le piston (20) est réalisé en métal et en ce que la paroi latérale cylindrique (36) du piston (20) s'étend de part et d'autre des faces avant (30) et arrière (34) du piston (20).

2. Dispositif selon la revendication 1, caractérisé en ce que le corps de cylindre (17) est réalisé en au moins deux parties qui comprennent un corps principal (18) en forme de tube étagé et un tube arrière de guidage (50), en ce que la chambre hydraulique (16) est formée dans une partie avant (24) du corps principal (18), et en ce que le tube arrière de guidage (50) est reçu coaxialement dans une partie arrière (26) de plus grand diamètre interne du corps principal (18), axialement en arrière du joint d'étanchéité (66), de sorte que le piston (20) est au moins en partie guidé dans le tube arrière (50).

3. Dispositif selon la revendication 2, caractérisé en ce que le joint d'étanchéité (66) est agencé dans le corps principal (18) du corps de cylindre (17).

4. Dispositif selon la revendication 2, caractérisé en ce que le joint d'étanchéité (66) est porté par l'extrémité axiale avant (74) du tube arrière de guidage (50).

5. Dispositif selon l'une quelconque des revendications 2 à 4, caractérisé en ce que la surface externe (110) du tube arrière de guidage (50) et/ou la surface interne (70) en vis-à-vis de la partie arrière (26) du corps principal (18) sont munies de gorges annulaires (112) formant des chicanes d'étanchéité.

6. Dispositif selon l'une quelconque des revendications précédentes, caractérisé en ce que le corps de cylindre (17) porte un deuxième joint d'étanchéité (68) qui est décalé axialement du premier joint (66) et qui coopère avec la paroi latérale (36) du piston (20).

7. Dispositif selon la revendication 6 prise en combinaison avec la revendication 3, caractérisé en ce que le second joint d'étanchéité (68) est reçu dans un logement (76) formé dans l'extrémité axiale avant (74) du tube arrière (50) et en ce que une rondelle (72) est agencée dans le corps principal (18), en butée contre l'extrémité axiale avant (74) du tube arrière (50) pour former une surface d'appui axiale arrière pour le premier joint (66).

8. Dispositif selon la revendication 6 prise en combinaison avec la revendication 4, caractérisé en ce que les deux joints (66, 68) sont portés par l'extrémité axiale avant (74) du tube arrière de guidage (50).

9. Dispositif selon la revendication 8, caractérisé en ce que la surface cylindrique interne (52) de l'extrémité axiale avant du tube arrière (50) est étagée de manière à former deux logements (80, 82) décalés axialement pour recevoir les deux joints d'étanchéité (66, 68), en ce que le logement arrière (82) est de diamètre inférieur au logement avant (80) de manière à délimiter un épaulement radial, en ce qu'une rondelle (72) est en butée contre l'épaulement de manière à former une surface d'appui arrière pour le joint (66) qui est reçu dans le logement avant (80), et en ce que le logement avant (80) débouche dans l'extrémité axiale avant (74) du tube (50).

10. Dispositif selon l'une quelconque des revendications 6 à 9, caractérisé en ce que l'un au moins des joints d'étanchéité (66, 68) est une coupelle à lèvre à frottement radial.

11. Dispositif selon l'une quelconque des revendications 6 à 10, caractérisé en ce que l'un au moins des joints d'étanchéité (66, 68) est un joint composite.

12. Dispositif selon l'une quelconque des revendications 2 à 12, caractérisé en ce que le diamètre interne du tube arrière de guidage (50) est égal à celui de la chambre hydraulique (16) et en ce que la partie arrière (26) du corps principal (18) du corps de cylindre (17), dans laquelle est reçue le tube de guidage (50), est d'un diamètre supérieur à celui de la chambre hydraulique (16).

13. Dispositif selon l'une quelconque des revendications précédentes, caractérisé en ce que le piston (20) comporte une portion tubulaire (38) qui s'étend axialement au-delà de la face transversale avant (30) du piston (20) de manière à guider un ressort de compression (64) qui est agencé dans la chambre hydraulique (16) entre la face transversale avant (30) du piston (20) et une paroi transversale avant (28) de la chambre (16).

14. Dispositif selon l'une quelconque des revendications précédentes, caractérisé en ce que le piston (20) comporte une portion tubulaire (40) qui s'étend axialement au-delà de la face arrière (34) du piston (20) et dans laquelle est reçue une extrémité avant (23) de la tige de piston (22).

15. Dispositif selon l'une quelconque des revendications précédentes, caractérisé en ce qu'au moins l'une des extrémités axiales (44, 54) du piston (20) coopère avec une surface cylindrique interne (42, 52) du corps de cylindre (17) qui est munie de rainures longitudinales (114).

16. Dispositif selon la revendication 15, caractérisé en ce que les rainures axiales (114) sont réalisées venues de matière avec le corps de cylindre (17).

17. Dispositif selon l'une des revendications 15 ou 16, caractérisé en ce que les rainures axiales (114) sont agencées dans la chambre hydraulique (16).

18. Dispositif selon la revendication 17, caractérisé en ce que les rainures axiales (114) sont agencées angulairement en correspondance avec des nervures de rigidification (25) formées à l'extérieur du corps de cylindre (17).

19. Dispositif selon l'une quelconque des revendications précédentes, caractérisé en ce que le piston (20) est réalisé en alliage d'aluminium.

20. Dispositif selon l'une quelconque des revendications 1 à 18, caractérisé en ce que le piston (20) est réalisé en acier.

21. Dispositif selon l'une quelconque des revendications précédentes, caractérisé en ce que le piston (20) est réalisé par forgeage.

22. Dispositif selon l'une quelconque des revendications 1 à 21, caractérisé en ce que le piston (20) est réalisé par emboutissage.

23. Dispositif selon l'une quelconque des revendications précédentes, caractérisé en ce que le piston (20) est guidé dans le corps de cylindre (17) par au moins deux patins annulaires (46), avant et arrière, qui sont réalisés sous la forme de bagues en matériau à faible coefficient de frottement, et qui sont reçus chacun dans une gorge annulaire agencée à chacune des extrémités axiales (44, 54) de la paroi latérale (36) du piston (20).

24. Dispositif selon la revendication 23, caractérisé en ce que le joint d'étanchéité (66) coopère avec un tronçon de la paroi latérale (36) du piston (20) qui est compris entre les deux patins de guidage (46).

## Patentansprüche

1. Hydraulische Betätigungsvorrichtung einer Kraftfahrzeugkupplung, die wenigstens einen Betätigungszylinder (10) enthält, wobei der Zylinder (10) einen allgemein rohrförmigen Zylinderkörper (17) umfaßt, in dem ein Kolben (20) axial gleitend verschiebbar gelagert ist, der über eine vordere Querfläche (30) eine zylindrische Hydraulikkammer (16) begrenzt und der über eine rückseitige Fläche (34) mit einer Kolbenstange (22) zusammenwirkt, wobei eine Anschlußöffnung (14) für einen Kanal (12) in der Hydraulikkammer (16) mündet und wobei der Zylinderkörper (17) aus Kunststoff ausgeführt ist und wenigstens eine Dichtung (66) trägt, die mit der zylindrischen Seitenwand (36) des Kolbens (20) zusammenwirkt, um die Abdichtung der Hydraulikkammer (16) sicherzustellen, **dadurch gekennzeichnet**, daß sich die zylindrische Seitenwand (36) des Kolbens (20) beiderseits der vorderen (30) und rückseitigen (34) Flächen des Kolbens (20) erstreckt.

2. Vorrichtung nach Anspruch 1, **dadurch gekennzeichnet**, daß der Zylinderkörper (17) aus wenigstens zwei Teilen ausgeführt ist, die einen Hauptkörper (18) in Form eines abgestuften Rohrs und ein hinteres Führungsrohr (50) umfassen, daß die Hydraulikkammer (16) in einem vorderen Teil (24) des Hauptkörpers (18) ausgebildet ist und daß das hintere Führungsrohr (50) koaxial in einem hinteren Teil (26) mit größerem Innendurchmesser des Hauptkörpers (18), axial hinter der Dichtung (66), aufgenommen ist, so daß der Kolben (20) wenigstens teilweise im hinteren Rohr (50) geführt ist.

3. Vorrichtung nach Anspruch 2, **dadurch gekennzeichnet**, daß die Dichtung (66) im Hauptkörper (18) des Zylinderkörpers (17) angeordnet ist.

4. Vorrichtung nach Anspruch 2, **dadurch gekennzeichnet,** daß die Dichtung (66) am vorderen axialen Ende (74) des hinteren Führungsrohrs (50) angebracht ist.

5. Vorrichtung nach einem der Ansprüche 2 bis 4, **dadurch gekennzeichnet,** daß die Außenfläche (110) des hinteren Führungsrohrs (50) und/oder die gegenüberliegende Innenfläche (70) des hinteren Teils (26) des Hauptkörpers (18) mit ringförmigen Auskehlungen (112) versehen sind, die Dichtungsschikanen bilden.

6. Vorrichtung nach einem der vorangehenden Ansprüche, **dadurch gekennzeichnet**, daß der Zylinderkörper (17) eine zweite Dichtung (68) trägt, die von der ersten Dichtung (66) axial versetzt ist und die mit der Seitenwand (36) des Kolbens (20) zusammenwirkt.

7. Vorrichtung nach Anspruch 6 in Kombination mit Anspruch 3, **dadurch gekennzeichnet**, daß die zweite Dichtung (68) in einer Aufnahme (76) aufgenommen ist, die im vorderen axialen Ende (74) des hinteren Rohrs (50) ausgebildet ist, und daß im Hauptkörper (18) eine Scheibe (72) anstoßend an das vordere axiale Ende (74) des hinteren Rohrs (50) angeordnet ist, um eine hintere axiale Auflagefläche für die erste Dichtung (66) zu bilden.

8. Vorrichtung nach Anspruch 6 in Kombination mit Anspruch 4, **dadurch gekennzeichnet**, daß die zwei Dichtungen (66, 68) am vorderen axialen Ende (74) des hinteren Führungsrohrs (50) angebracht sind.

9. Vorrichtung nach Anspruch 8, **dadurch gekennzeichnet**, daß die zylindrische Innenfläche (52) des vorderen axialen Endes des hinteren Rohrs (50) abgestuft ist, so daß zwei axial versetzte Aufnahmen (80, 82) gebildet werden, um die beiden Dichtungen (66, 68) aufzunehmen, daß die hintere Aufnahme (82) einen kleineren Durchmesser als die vordere Aufnahme (80) aufweist, so daß eine radiale Schulter begrenzt wird, daß eine Scheibe (72) an die Schulter anstößt, um eine hintere Auflagefläche für die Dichtung (66) zu bilden, die in der vorderen Aufnahme (80) aufgenommen ist, und daß die vordere Aufnahme (80) am vorderen axialen Ende (74) des Rohrs (50) mündet.

10. Vorrichtung nach einem der Ansprüche 6 bis 9, **dadurch gekennzeichnet**, daß wenigstens eine Dichtung (66, 68) ein Lippendichtungsteller mit radialer Reibung ist.

11. Vorrichtung nach einem der Ansprüche 6 bis 10, **dadurch gekennzeichnet**, daß wenigstens eine der Dichtungen (66, 68) eine Verbunddichtung ist.

12. Vorrichtung nach einem der Ansprüche 2 bis 11, **dadurch gekennzeichnet**, daß der Innendurchmesser des hinteren Führungsrohrs (50) gleich dem Innendurchmesser der Hydraulikkammer (16) ist und daß der hintere Teil (26) des Hauptkörpers (18) des Zylinderkörpers (17), in dem das Führungsrohr (50) aufgenommen ist, einen Durchmesser aufweist, der größer als der Durchmesser der Hydraulikkammer (16) ist.

13. Vorrichtung nach einem der vorangehenden Ansprüche, **dadurch gekennzeichnet**, daß der Kolben (20) einen rohrförmigen Abschnitt (38) umfaßt, der sich axial über die vordere Querfläche (30) des Kolbens (20) hinaus erstreckt, um eine Druckfeder (64) zu führen, die in der Hydraulikkammer (16) zwischen der vorderen Querfläche (30) des Kolbens (20) und einer vorderen Querwand (28) der Kammer (16) angeordnet ist.

14. Vorrichtung nach einem der vorangehenden Ansprüche, **dadurch gekennzeichnet**, daß der Kolben (20) einen rohrförmigen Abschnitt (40) umfaßt, der sich axial über die rückseitige Fläche (34) des Kolbens (20) hinaus erstreckt und in dem ein vorderes Ende (23) der Kolbenstange (20) aufgenommen ist.

15. Vorrichtung nach einem der vorangehenden Ansprüche, **dadurch gekennzeichnet**, daß wenigstens eines der axialen Enden (44, 54) des Kolbens (20) mit einer zylindrischen Innenfläche (42, 52) des Zylinderkörpers (17) zusammenwirkt, die mit Längsnuten (114) versehen ist.

16. Vorrichtung nach Anspruch 15, **dadurch gekennzeichnet,** daß die axialen Nuten (114) einstückig mit dem Zylinderkörper (17) ausgeführt sind.

17. Vorrichtung nach Anspruch 15 oder 16, **dadurch gekennzeichnet**, daß die axialen Nuten (114) in der Hydraulikkammer (16) angeordnet sind.

18. Vorrichtung nach Anspruch 17, **dadurch gekennzeichnet**, daß die axialen Nuten (114) winklig in Übereinstimmung mit Versteifungsrippen (25) angeordnet sind, die außen am Zylinderkörper (17) ausgebildet sind.

19. Vorrichtung nach einem der vorangehenden Ansprüche, **dadurch gekennzeichnet**, daß der Kolben (20) aus Aluminiumlegierung ausgeführt ist.

20. Vorrichtung nach einem der Ansprüche 1 bis 18, **dadurch gekennzeichnet**, daß der Kolben (20) aus Stahl ausgeführt ist.

21. Vorrichtung nach einem der vorangehenden Ansprüche, **dadurch gekennzeichnet**, daß der Kolben (20) durch Schmieden ausgeführt ist.

22. Vorrichtung nach einem der Ansprüche 1 bis 21, **dadurch gekennzeichnet**, daß der Kolben (20) durch Tiefziehen ausgeführt ist.

23. Vorrichtung nach einem der vorangehenden Ansprüche, **dadurch gekennzeichnet**, daß der Kolben (20) im Zylinderkörper (17) durch wenigstens zwei, vordere und hintere, ringförmige Segmente (46) geführt ist, die in Form von Buchsen aus einem Werkstoff mit niedrigem Reibungskoeffizienten ausgeführt sind und die jeweils in einer an jedem der axialen Enden (44, 54) der Seitenwand (36) des Kolbens (20) angeordneten ringförmigen Auskehlung aufgenommen sind.

24. Vorrichtung nach Anspruch 23, **dadurch gekennzeichnet**, daß die Dichtung (66) mit einem Teilstück der Seitenwand (36) des Kolbens (20) zusammenwirkt, das zwischen den beiden Führungssegmenten (46) enthalten ist.

## Claims

1. Apparatus for the hydraulic control of a motor vehicle clutch, of the type including at least one control cylinder (10), of the type in which the cylinder (10) comprises a generally tubular cylinder body (17) in which there slides axially a piston (20) which, by a front transverse face (30), delimits a cylindrical hydraulic chamber (16), and which is in cooperation through a rear face (34) with a piston rod (22), of the type in which a port (14) for connection of a duct (12) is open into the hydraulic chamber (16), and of the type in which the cylinder body (17) is made of plastics material and carries at least one ring seal (66) which is in cooperation with the cylindrical side wall (36) of the piston (20) so as to seal the hydraulic chamber (16), characterised in that the piston (20) is made of metal, and in that the cylindrical side wall (36) of the piston (20) extends on either side of the front face (30) and rear face (34) of the piston (20).

2. Apparatus according to Claim 1, characterised in that the cylinder body (17) is made in at least two parts which consist of a main body (18), in the form of a stepped tube, and a rear guide tube (50), in that the hydraulic chamber (16) is defined in a front portion (24) of the main body (18), and in that the rear guide tube (50) is received coaxially in a rear portion (26) of the main body (18), having a larger internal diameter and disposed axially behind the ring seal (66), whereby the piston (20) is at least partly guided in the rear tube (50).

3. Apparatus according to Claim 2, characterised in that the ring seal (66) is disposed in the main body (18) of the cylinder body (17).

4. Apparatus according to Claim 2, characterised in that the ring seal (66) is carried by the front axial end (74) of the rear guide tube (50).

5. Apparatus according to any one of Claims 2 to 4, characterised in that annular grooves (112), which define sealing labyrinths, are provided on the outer surface (110) of the rear guide tube (50) and/or the inner surface (70) facing the rear portion (26) of the main body (18).

6. Apparatus according to any one of the preceding Claims, characterised in that the cylinder body (17) carries a second ring seal (68) which is offset axially from the first seal (66), and which is in cooperation with the side wall (36) of the piston (20).

7. Apparatus according to Claim 6 taken in combination with Claim 3, characterised in that the second ring seal (68) is received in a housing (76) formed in the front axial end (74) of the rear tube (50), and in that a washer (72) is located in the main body (18) in abutment against the front axial end (74) of the rear tube (50), so as to define a rear axial abutment surface for the first seal (66).

8. Apparatus according to Claim 6 taken in combination with Claim 4, characterised in that the two seals (66, 68) are carried by the front axial end (74) of the rear guide tube (50).

9. Apparatus according to Claim 8, characterised in that the inner cylindrical surface (52) of the front axial end of the rear tube (50) is stepped, so that it defines two seatings (80, 82) offset axially to receive the two ring seals (66, 68), in that the rear seating (82) has a smaller diameter than the front seating (80) so as to define a radial shoulder, in that a washer (72) is in abutment against the shoulder so as to define a rear abutment surface for the seal (66) which is received in the front seating (80), and in that the front seating (80) is open in the front axial end (74) of the tube (50).

10. Apparatus according to any one of Claims 6 to 9, characterised in that at least one of the ring seals (66, 68) is a cupped ring with a lip giving radial friction.

11. Apparatus according to any one of Claims 6 to 10, characterised in that at least one of the ring seals (66, 68) is a composite seal.

12. Apparatus according to any one of Claims 2 to 12, characterised in that the internal diameter of the rear guide tube (50) is equal to that of the hydraulic chamber (16), and in that the rear portion (26) of the main body (18) of the cylinder body (17), in which the guide tube (50) is received, has a diameter greater than that of the hydraulic chamber (16).

13. Apparatus according to any one of the preceding Claims, characterised in that the piston (20) includes a tubular portion (38) which extends axially beyond the front transverse face (30) of the piston (20), in such a way as to guide a compression spring (64) which is arranged in the hydraulic chamber (16) between the front transverse face (30) of the piston (20) and a front transverse wall (28) of the chamber (16).

14. Apparatus according to any one of the preceding Claims, characterised in that the piston (20) includes a tubular portion (40) which extends axially beyond the rear face (34) of the piston (20), and in which a front end (23) of the piston rod (22) is received.

15. Apparatus according to any one of the preceding Claims, characterised in that at least one of the axial ends (44, 54) of the piston (20) is in cooperation with a cylindrical internal surface (42, 52) of the cylinder body (17), which is formed with longitudinal grooves (114).

16. Apparatus according to Claim 15, characterised in that the axial grooves (114) are formed integrally with the cylinder body (17).

17. Apparatus according to Claim 15 or Claim 16, characterised in that the axial grooves (114) are disposed in the hydraulic chamber (16).

18. Apparatus according to Claim 17, characterised in that the axial grooves (114) are disposed circumferentially in corresponding relationship with stiffening ribs (25) formed on the outside of the cylinder body (17).

19. Apparatus according to any one of the preceding Claims, characterised in that the piston (20) is made of aluminium alloy.

20. Apparatus according to any one of Claims 1 to 18, characterised in that the piston (20) is made of steel.

21. Apparatus according to any one of the preceding Claims, characterised in that the piston (20) is made by forging.

22. Apparatus according to any one of Claims 1 to 21, characterised in that the piston (20) is press-formed.

23. Apparatus according to any one of the preceding Claims, characterised in that the piston (20) is guided in the cylinder body (17) by at least two annular lugs (46) at the front and the rear, which are made in the form of sleeves in material having a low coefficient of friction, and each of which is received in an annular groove formed in each of the axial ends (44, 54) of the side wall (36) of the piston (20).

24. Apparatus according to Claim 23, characterised in that the sealing ring (66) is in cooperation with a portion of the side wall (36) of the piston (20) which is located between the two guide lugs (46).
